(19)

Europäisches
Patentamt
European
Patent Office
Office européen
des brevets

(11) **EP 4 170 960 A1**

(12) **DEMANDE DE BREVET EUROPEEN**

(43) Date de publication:
**26.04.2023 Bulletin 2023/17**

(21) Numéro de dépôt: **22202225.3**

(22) Date de dépôt: **18.10.2022**

(51) Classification Internationale des Brevets (IPC):
**H04L 9/00** *(2022.01)*      **H04L 9/08** *(2006.01)*
**H04L 9/30** *(2006.01)*

(52) Classification Coopérative des Brevets (CPC):
**H04L 9/085; H04L 9/008; H04L 9/3093;**
H04L 2209/46; H04L 2209/76; H04L 2209/80

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **19.10.2021 FR 2111110**

(71) Demandeur: **IDEMIA Identity & Security France
92400 Courbevoie (FR)**

(72) Inventeurs:
• **CHABANNE, Hervé
  92400 COURBEVOIE (FR)**
• **DESPIEGEL, Vincent
  92400 COURBEVOIE (FR)**

(74) Mandataire: **Regimbeau
20, rue de Chazelles
75847 Paris Cedex 17 (FR)**

(54) **PROCÉDÉ DE CONTRÔLE D'IDENTITÉ UTILISANT DES TERMINAUX D'UTILISATEUR**

(57)    Procédé de contrôle d'identité d'un individu de référence, le procédé comprenant des étapes suivantes mises en œuvre par un dispositif de contrôle (1) : sélection (108) de terminaux respectivement associés à des individus faisant partie d'un ensemble d'individus dont les identités sont destinées à être contrôlées par le dispositif de contrôle (1), l'individu faisant partie de l'ensemble d'individus ; envoi (110), à chacun des terminaux sélectionnés, d'une donnée d'entrée associée à l'individu de référence et d'une requête demandant au terminal de mettre en œuvre un premier traitement cryptographique produisant une donnée de sortie à partir de la donnée d'entrée et d'une clé privée propre à l'individu associé au terminal; réception (112) de chaque donnée de sortie ; et mise en œuvre (114) d'un deuxième traitement cryptographique produisant un résultat de contrôle relatif à l'individu de référence à partir de chaque donnée de sortie.

Fig. 3

EP 4 170 960 A1

## Description

### DOMAINE DE L'INVENTION

La présente invention concerne un procédé de contrôle d'identité.

### ETAT DE LA TECHNIQUE

Pour sécuriser l'embarquement de passagers à bord d'un avion, une solution envisagée est de constituer une base de données biométriques des passagers avant l'embarquement. Une telle base de données est par exemple réalisée à partir de données biométriques. L'identité des passages peut être contrôlée avant embarquement en interrogeant une telle base de données.

La constitution de telles bases de données est soumise dans certaines pays à des réglementations. En particulier, de telles bases de données biométriques ne peuvent être constituées sans une autorisation préalable d'une autorité (par exemple, la CNIL en France). Généralement, l'autorité conditionne cette autorisation à des gages de sécurité.

Pour protéger en confidentialité les données stockées dans une telle base de données, une solution envisagée est de les chiffrer.

Il pourrait être envisagé de chiffrer les données avec une seule clé. Toutefois, cette solution est dangereuse, car si un attaquant parvient à connaître la clé en question et accède à la base de données, il pourrait en déchiffrer tout le contenu.

Une autre solution serait de confier à chaque individu une clé privée, qui serait stockée sur un terminal de l'individu. Toutefois, cette solution est contraignante, car n'est pas généralisable aux individus qui n'ont pas de terminal adapté à cet effet, ou qui ne souhaitent pas que leur terminal soit utilisé à cet effet.

### EXPOSE DE L'INVENTION

Un but de l'invention est de proposer un contrôle d'identité simple et sécurisé, et qui soit auditable. Par un contrôle d'identité « auditable », on entend un contrôle d'identité dont le niveau de sécurité peut être vérifié *a posteriori* par une autorité indépendante.

Il est à cet effet proposé, selon un premier aspect, un procédé de contrôle d'identité d'un individu de référence, le procédé comprenant des étapes suivantes mises en oeuvre par un dispositif de contrôle :

- sélection de terminaux respectivement associés à des individus faisant partie d'un ensemble d'individus dont les identités sont destinées à être contrôlées par le dispositif de contrôle, l'individu faisant partie de l'ensemble d'individus,

- envoi, à chacun des terminaux sélectionnés, d'une donnée d'entrée associée à l'individu de référence et d'une requête demandant au terminal de mettre en oeuvre un premier traitement cryptographique produisant une donnée de sortie à partir de la donnée d'entrée et d'une clé privée propre à l'individu associé au terminal,

- réception de chaque donnée de sortie,

- mise en oeuvre d'un deuxième traitement cryptographique produisant un résultat de contrôle relatif à l'individu de référence à partir de chaque donnée de sortie.

Dans le procédé proposé, une partie des traitements cryptographiques conduisant au résultat de contrôle d'identité sont confiés aux terminaux des individus à contrôler ayant été sélectionnés. Une telle distribution renforce la sécurité du procédé de contrôle d'identité, car exigerait, pour être cassé, une attaque de tous les dispositifs en présence (dispositif de contrôle 1 et terminaux mis à contribution).

Par ailleurs, ce procédé est auditable. Pour cela, un auditeur (par exemple, un représentant de la CNIL en France) peut faire en sorte qu'un terminal en sa possession soit enrôlé auprès du dispositif de contrôle, de sorte à permettre à ce terminal d'être mis à contribution en réalisation le premier traitement cryptographique.

Le procédé selon le premier aspect peut également comprendre les caractéristiques optionnelles suivantes, qui peuvent être prises seules ou en combinaison à chaque fois que cela est possible.

De préférence, sont sélectionnés au moins trois terminaux à l'étape de sélection.

De préférence, la donnée de sortie produite par un terminal dépend également d'un aléa généré par le terminal.

De préférence :

- la donnée d'entrée est une première portion $c_1$ d'un chiffré résultant d'un chiffrement appliqué à des données d'identité de l'individu de référence,

- le deuxième traitement cryptographique produit le résultat de contrôle relatif à l'individu de référence à partir de chaque donnée de sortie et à partir d'une deuxième portion $c_0$ du chiffré,

- les mises en oeuvre du premier traitement cryptographique par les terminaux et la mise en oeuvre du deuxième traitement cryptographique par le terminal de contrôle forment ensemble un déchiffrement du chiffré à l'aide d'une clé dépendant des clés privées propres aux individus associés aux terminaux sélectionnés.

De préférence, le chiffré résulte d'un chiffrement homomorphe.

De préférence, le déchiffrement est un déchiffrement selon le schéma Brakerski/Fan-Vercauteren.

De préférence, la donnée de sortie $w_i$ produite par un terminal d'indice i sélectionné est calculée comme suit :

$$w_i = s_i . c_1 \ + \ e_i + 2^k . d . r_i \ mod \ q$$

où :

- $s_i$ désigne la clé privée propre à un individu associé au terminal d'indice i,
- $c_1$ désigne la donnée d'entrée,
- $e_i$ et $r_i$ sont des aléas générés par le terminal d'indice i,
- $q$ est un nombre prédéfini,
- d est la partie entière inférieure de $q/t$, t étant un entier prédéfini strictement inférieur à $q$,
- k est un nombre de bits du résultat de contrôle relatif à l'individu de référence.

De préférence, le deuxième traitement cryptographique comprend

- le calcul de la valeur suivante :

$$c_0 + \Sigma_i \ w_i$$

où $c_0$ désigne une donnée formant avec la donnée d'entrée un chiffré résultant d'un chiffrement appliqué à des données d'identité de l'individu de référence, et où $w_i$ désigne la donnée de sortie produite par le terminal associé à l'individu d'indice i, et
- une extraction de $k$ bits de poids les plus faibles d'un nombre modulo $t$, le nombre étant l'entier le plus proche du produit de la valeur calculée par $t/q$, $t$ étant un entier prédéfini strictement inférieur à $q$.

De préférence, les terminaux sont sélectionnés en fonction d'un élément d'identité des individus associés aux terminaux.

De préférence, les terminaux sont sélectionnés en fonction d'un élément aléatoire vérifiable.

De préférence, le procédé selon le premier aspect comprend également une étape d'acquisition d'une donnée biométrique de l'individu de référence, dans lequel la donnée d'entrée est au moins une portion d'un chiffré d'une donnée indiquant si l'individu de référence est référencé dans une base de données biométriques.

Il est également proposé, selon un deuxième aspect, un procédé de contrôle d'accès à une zone sécurisée, le procédé comprenant la mise en oeuvre, pour chaque individu faisant partie d'un ensemble d'individus candidatant pour accéder à la zone sécurisée, d'un contrôle de l'identité de l'individu par le procédé selon le premier aspect.

Il est également proposé, selon un troisième aspect, une mémoire lisible par ordinateur stockant des instructions exécutables par une unité de traitement de données pour l'exécution des étapes du procédé selon le premier aspect ou selon le deuxième aspect.

**DESCRIPTION DES FIGURES**

D'autres caractéristiques, buts et avantages de l'invention ressortiront de la description qui suit, qui est purement illustrative et non limitative, et qui doit être lue en regard des dessins annexés sur lesquels :

Les figures 1 et 2 illustrent de façon schématique différents dispositifs faisant partie d'un système selon un mode de réalisation, utilisable pour contrôler l'identité d'individus.

Les figures 3, 4 et 5 sont des organigrammes d'étapes d'un procédé de contrôle d'identité selon un mode de réalisation.

Sur l'ensemble des figures, les éléments similaires portent des références identiques.

**DESCRIPTION DETAILLEE DE L'INVENTION**

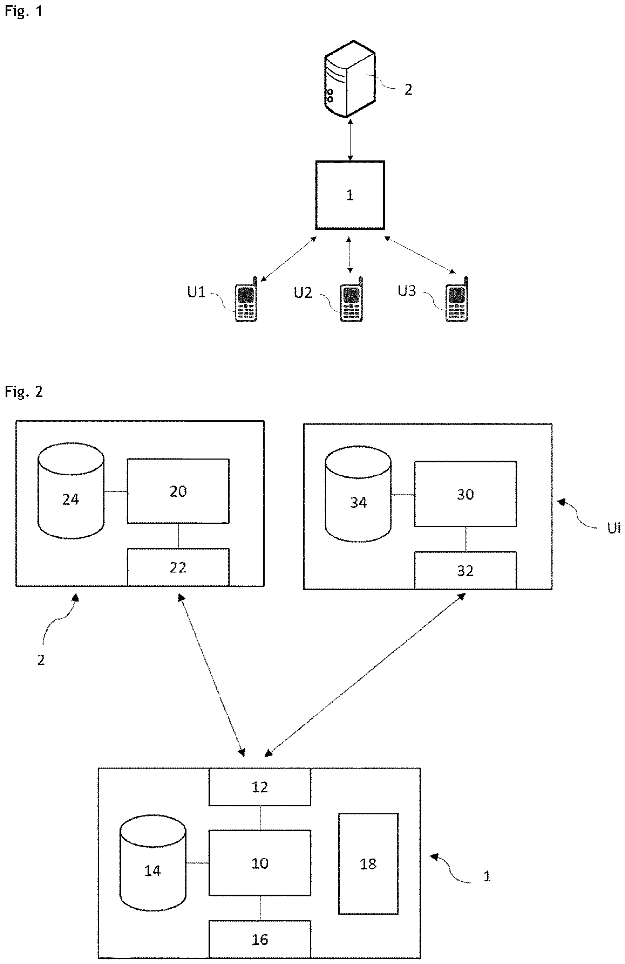

En référence aux **figures 1 et 2,** un système comprend un dispositif de contrôle 1, un serveur 2 et une pluralité de terminaux. Sur la figure 1, seuls trois terminaux U1, U2, U3 sont illustrés à titre d'exemple non-limitatif.

Le dispositif de contrôle 1 a pour fonction de contrôler l'identité d'individu.

Le dispositif de contrôle 1 comprend une unité de traitement de données 10, une interface de communication 12 pour communiquer avec les terminaux 3 et avec le serveur 2, et une mémoire 14.

L'unité de traitement de données 10 est configuré pour mettre en oeuvre certaines étapes d'un procédé de contrôle d'identité qui sera décrit plus loin. Par exemple, l'unité de traitement de données 10 comprend au moins un processeur configuré pour exécuter les instructions de code d'un programme de manière à mettre en oeuvre ces étapes.

L'interface de communication 12 est par exemple de type radio sans fil, et utilise un protocole de communication quelconque (Wi-Fi, Bluetooth, etc.).

La mémoire 14 est adapté pour mémoriser des données manipulées ou produites par l'unité de traitement 12. Elle est de type quelconque.

Le dispositif de contrôle 1 comprend par ailleurs des moyens d'acquisition de données biométrique 16. Les moyens d'acquisition 16 peuvent comprendre une caméra configurée pour acquérir des images montrant le visage d'un individu, et pour extraire des données biométriques de telles images. Alternativement, les moyens d'acquisition 16 peuvent comprendre un capteur d'empreinte digitale et/ou un capteur d'iris.

Dans un mode de réalisation, le dispositif de contrôle 1 comprend en outre un portique 18 pouvant être fermé pour empêcher un individu d'accéder à une zone sécurisée, et être ouvert pour autoriser un tel accès. L'unité de traitement de données 10 est en particulier configurée pour commander l'ouverture et la fermeture du portique 18.

Par exemple, le dispositif de contrôle 1 se trouve dans un aéroport, et la zone sécurisée est une zone d'embarquement ; dans cette application particulière, les individus souhaitant accéder à la zone d'embarquement sont les passagers d'un vol, dont l'identité est à contrôler avant d'embarquer.

Par ailleurs, le serveur 2 comprend une unité de traitement de données 20, une interface de communication 22 pour communiquer avec le dispositif de contrôle 1, et une mémoire 24.

Les informations fournies ci-dessus à propos de l'unité de traitement de données 10 et de l'interface de communication 12 sont applicables également à l'unité de traitement 20 et à l'interface de communication 22.

La mémoire 24 stocke une base de données biométriques protégées en confidentialité. Sont référencées dans la base de données des données biométriques se rapportant à des individus précédemment enrôlés. Les données biométriques d'un individu enrôlé ne sont pas en clair dans la base de données, mais sont au contraire protégées en confidentialité, c'est-à-dire sont une forme chiffrée, grâce à un procédé de chiffrement connu de l'état de la technique.

L'unité de traitement de données 20 est configurée pour traiter des requêtes émanant du dispositif de contrôle 1, ces requêtes visant à savoir si une donnée biométrique est référencée ou non dans la base de données. L'unité de traitement 20 est configurée pour répondre à une requête de ce type par une réponse qui est elle-même protégée en confidentialité. En d'autres termes, la réponse est un chiffré, qu'il faut encore déchiffrer pour savoir si la donnée biométrique fournie avec la requête initiale était bien référencée dans la base de données biométriques.

Par ailleurs, un terminal Ui comprend une unité de traitement de données 30, une interface de communication 32 pour communiquer avec le dispositif de contrôle 1, et une mémoire 34.

Les informations fournies ci-dessus à propos de l'unité de traitement de données 10 et de l'interface de communication 12 sont applicables également à l'unité de traitement 30 et à l'interface de communication 32. Les communications entre les interfaces 12, 22 et les communications entre les interfaces 12, 32 peut utiliser des protocoles identiques ou bien différents.

Est mémorisée dans la mémoire 34 une clé privée propre à un individu qui possède le terminal.

Chaque terminal Ui est conforme à la description qui précède. Les clés privées stockées dans les mémoires respectives des terminaux Ui sont différentes.

Les terminaux U1, U2, U3 sont typiquement des terminaux portatifs tels que des smartphones.

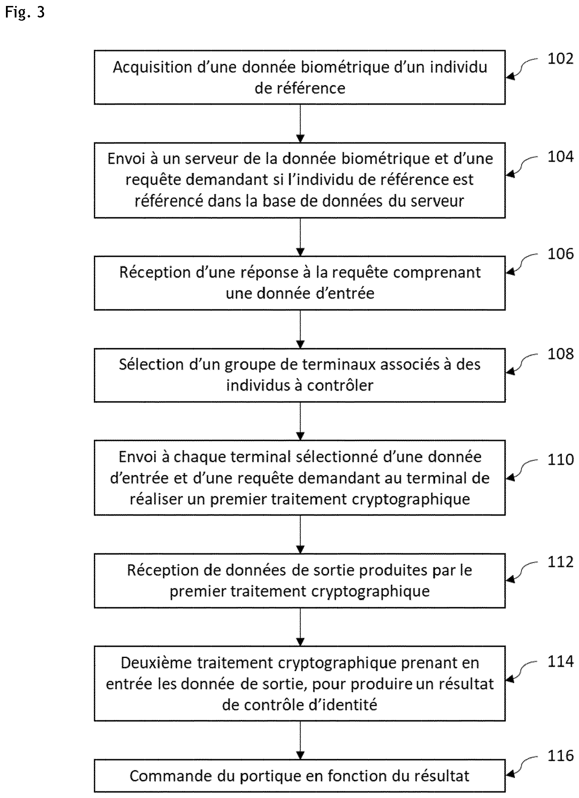

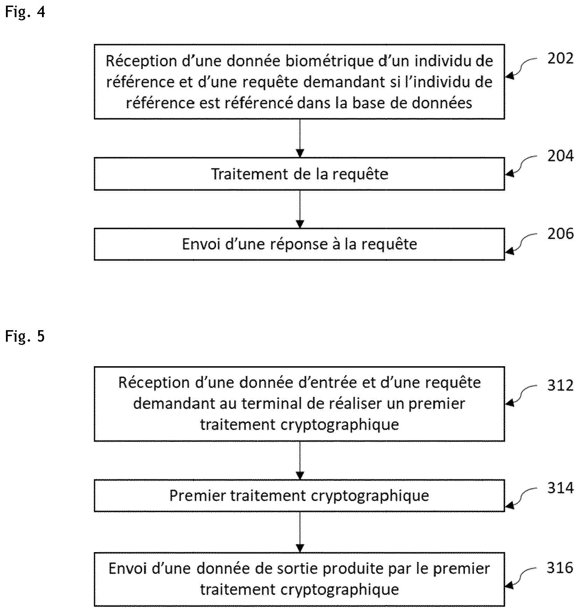

En référence aux **figures 3, 4 et 5,** un procédé de contrôle d'identité au moyen du système tel que décrit précédemment comprend les étapes suivantes. Les étapes mises en oeuvre par le dispositif de contrôle sont représentées sur la figure 3, les étapes mises en oeuvre par le serveur sont représentées sur la figure 4, et les étapes mises en oeuvre par un terminal Ui sont représentées sur la figure 5. Lorsqu'il sera mentionné dans la suite que le dispositif de contrôle 1, le serveur 2 ou un terminal Ui met en œuvre un traitement, on comprendra que ce traitement est plus précisément mis en oeuvre par l'unité de traitement de données correspondante 10, 20 ou 30.

A titre préliminaire, on suppose qu'un ensemble d'individus se présente à proximité du dispositif de contrôle 1. L'identité de chaque individu de cet ensemble est à contrôler. Par exemple, les individus à contrôler sont les passagers d'un vol se présentant à une porte d'embarquement d'un aéroport où a été installé le dispositif de contrôle 1.

Certains individus de cet ensemble sont en possession de terminaux Ui qui leur sont propres. Dans ce qui suit, on supposera qu'au moins trois individus sont munis d'un terminal conforme à la description qui précède. En d'autres termes, au moins trois terminaux conformes à la description qui précèdent se trouve à proximité du dispositif de contrôle 1, comme représenté en figure 1.

Un individu de l'ensemble, que l'on appelle par convention individu de référence, se présente devant le dispositif de contrôle 1.

Dans une étape 102, le dispositif de contrôle 1 acquiert une donnée biométrique de l'individu de référence. Cette étape peut être réalisée à l'aide des moyens d'acquisition biométrique du dispositif de contrôle 1. En variante, si l'individu de référence est en possession d'un terminal Ui (ce qui n'est pas obligatoire), ce terminal Ui peut acquérir la donnée biométrique et ensuite la transmettre au dispositif de contrôle 1 via l'interface de communication 32.

Dans une étape 104, le dispositif envoie au serveur 2 la donnée biométrique de l'individu de référence et une requête demandant si la donnée biométrique est référencée dans la base de données, autrement dit une donnée biométrique de l'individu de référence est présente dans la base de données.

Dans une étape 202, le serveur reçoit la donnée biométrique de l'individu de référence ainsi que la requête.

Dans une étape 204, le serveur 2 applique un traitement connu de l'état de la technique à cet effet. Ce traitement produit une réponse se présentant sous la forme d'un chiffré. Dans ce qui suit, on considérera un mode de réalisation dans lequel ce chiffré se présente sous la forme d'une paire de données $c_0$, $c_1$. Ces deux données constituent deux portions différentes du chiffré.

De préférence, les traitements réalisés par le serveur 2 sont réalisés dans un domaine chiffré (les données d'entrée de ces traitements de données ne sont pas en clair). Dans un mode de réalisation, la donnée biométrique de l'individu de référence est chiffrée avant traitement par le serveur 2. Ce chiffrement peut être réalisé par le dispositif de contrôle 1 ou bien dans une étape préliminaire par le serveur 2.

Dans une étape 206, la réponse produite est transmise par le serveur 2 au dispositif de contrôle 1. La réponse indique si la donnée biométrique acquise, se rapportant à l'individu de référence, est référencée ou non dans la base de données, mais cette indication n'est pas en clair. Le dispositif de contrôle 1 reçoit la réponse dans une étape 106. A ce stade, le dispositif ne peut donc pas prendre connaissance de cette indication. On va voir que pour obtenir cette indication, des terminaux sont mis à contribution.

On suppose à ce stade que le dispositif de contrôle 1 est capable de savoir que des terminaux mobiles sont associés à des individus faisant partie de l'ensemble d'individus, via la mise en oeuvre d'une procédure d'enrôlement préalable et/ou d'un dialogue entre les terminaux mobiles et le dispositif de contrôle 1.

Dans une étape de sélection 108, le dispositif de contrôle 1 sélectionne un groupe de N terminaux respectivement associés à des individus faisant partie de l'ensemble d'individus à contrôler. N peut être un nombre prédéfini, de préférence supérieur ou égal à 3.

Cette étape de sélection 108 se fonde par exemple sur un élément d'identité des individus, par exemple leur nom de famille, leur prénom, etc. Par exemple, le dispositif de contrôle 1 obtient le nom de famille de chaque individu de l'ensemble, et les classe par ordre alphabétique. Un groupe est constitué par N individus dont les noms sont adjacents dans la liste alphabétique ainsi obtenue. En variante, le dispositif de contrôle 1 obtient un chiffré d'élément d'identité de chaque individu de l'ensemble, par exemple un chiffré de nom de famille. Les chiffrés sont des nombres qui peuvent être également classés par ordre de valeur, et un groupe de N individus peut être ainsi constitué en prenant N chiffrés de valeurs adjacentes une fois classés.

De préférence, la sélection n'est pas réalisée uniquement sur la base d'un élément d'identité, mais également sur la base d'un élément aléatoire vérifiable, également nommé dans la littérature balise aléatoire (« randomness beacon » en anglais). Cet élément extérieur apporte de l'entropie à la sélection, mais permet une vérification *a posteriori* d'une sélection réalisée à l'étape 108. Des exemples de balises aléatoires utilisables pour fonder la sélection 108 sont décrites dans les documents suivants :

- J. Clark and U. Hengartner. On the Use of Financial Data as a Random Beacon. Usenix EVT/WOTE, 2010
- I. Bentov, A. Gabizon, and D. Zuckerman. Bitcoin beacon. arXiv preprint arXiv:1605.04559, 2016 / J. Bonneau, J. Clark, and S. Goldfeder. On bitcoin as a public randomness source. https://eprint.iacr.org/2015/1015.pdfa, 2015
- Dan Boneh, Joseph Bonneau, Benedikt Bünz, Ben Fisch: Verifiable Delay Functions. CRYPTO (1) 2018: 757-788.

Il est à noter que l'étape de sélection 108 peut être réalisée avant, pendant ou après les étapes 102, 104, 106, 202, 204, 206.

Au terme de l'étape de sélection 108, un groupe de N terminaux U1, ..., Un a été constitué.

Dans ce qui suit, on détaille des étapes mises en oeuvre pour chaque terminal sélectionné Ui.

Dans une étape 110, le dispositif de contrôle 1 envoie au terminal Ui la donnée $c_1$, constituant une portion du chiffré retourné par le serveur 2. En revanche, l'autre portion $c_0$ de ce chiffré n'est pas envoyée au terminal Ui. Le dispositif de contrôle 1 envoie par ailleurs au terminal Ui une requête demandant au terminal Ui de mettre en oeuvre un premier traitement cryptographique produisant une donnée de sortie $w_i$ à partir de la donnée $c_1$ et à partir de la clé privée $s_i$ mémorisée par le terminal Ui.

Sur réception de cette requête (étape 312), le terminal Ui met en oeuvre le premier traitement cryptographique précité (étape 314) à partir de la donnée d'entrée.

Dans une étape 316, le terminal Ui transmet la donnée de sortie $w_i$ au dispositif de contrôle 1 en réponse à la requête. Le dispositif de contrôle réceptionne la donnée de sortie $w_i$ envoyée par le terminal Ui dans une étape 112.

Les étapes 110, 312, 314, 316 qui précèdent sont répétées pour chacun des N terminaux U1, ..., UN. En conséquence, le dispositif de contrôle 1 obtient N données de sortie $w_1$, ..., $w_N$ (étape 112).

Dans une étape 114, le dispositif de contrôle 1 met en oeuvre un deuxième traitement cryptographique prenant en entrée les N données de sortie $w_1$, ..., $w_N$, et produisant sur leur base un résultat de contrôle relatif à l'individu de référence.

Le deuxième traitement cryptographique 114 prend également en entrée la portion de chiffré $c_0$.

Les N mises en œuvre du premier traitement cryptographique distribuées entre les N terminaux et la mise en oeuvre ultérieure du deuxième traitement cryptographique forment ensemble un déchiffrement du chiffré ($c_0$, $c_1$) à l'aide d'une clé $s$ dépendant des N clés privées $s_1$, ... $s_N$. On constate ici que certaines étapes de ce déchiffrement ont été déléguées à des terminaux associés à des individus dont l'identité est à contrôler. Le déchiffrement n'est ainsi pas confié dans sa totalité au dispositif de contrôle 1 seul.

Le résultat du contrôle d'identité indique si la donnée biométrique de l'individu de référence qui a été acquise à l'étape 102 est référencée ou non dans la base donnée, autrement dit si l'individu de référence a été enrôlé. Dans le contexte particulier de l'accès à une zone sécurisée, l'individu de référence a été enrôlé lorsqu'il lui a été donné un droit d'accès à cette zone (sous la forme, par exemple, d'un ticket ou billet matériel ou dématérialisé).

Dans une étape 116, l'unité de traitement 10 du dispositif de contrôle 1 commande une ouverture du portique 18, ou son maintien en position ouverte, dans le cas où le résultat de contrôle indique que la donnée biométrique de l'individu qui a été acquise est référencée dans la base donnée. Sinon, le portique est fermé ou reste fermé.

Dans un mode de réalisation, le déchiffrement réalisé est un déchiffrement homomorphe, par exemple un déchiffrement selon le schéma Brakerski/Fan-Vercauteren (BFV). En outre, la clé s de déchiffrement est la somme des N clés privées du groupe :

$$s = \Sigma_i \, s_i$$

Dans une première variante de ce mode de réalisation homomorphe, le premier traitement cryptographique peut calculer la donnée de sortie $w_i$ comme suit :

$$w_i = s_i . c_1 + e_i$$

où $e_i$ est un aléa généré par le terminal Ui.

Dans une deuxième variante de ce mode de réalisation homomorphe, qui présentent l'avantage d'être plus sécurisé que la première variante, le premier traitement cryptographique calcule la donnée de sortie $w_i$ comme suit :

$$w_i = s_i . c_1 + e_i + 2^k . d . r_i \, mod \, q$$

où :

- k, q sont des nombres entiers prédéfinis,
- d est la partie entière inférieure de q/t (t étant un entier prédéfini strictement inférieur à q),
- $r_i$ est un autre aléa généré par le terminal Ui.

les aléas $r_i$ et $e_i$ permettent de dissimuler une partie des résultats (une partie non utile pour le dispositif de contrôle 1).

Par exemple, le deuxième traitement cryptographique comprend l'addition suivante :

$$c_0 + \Sigma_i \, w_i$$

Dans la deuxième variante de réalisation, le dispositif de contrôle 1 peut déduire de ce calcul la valeur $d(m + 2^k r) + e \, mod \, q$, où $r = \Sigma_i \, r_i$.

Dans cette expression, m est un message comprenant :

- k bits de poids faible constituant le résultat de contrôle d'identité , c'est-à-dire le résultat d'un déchiffrement du chiffré ($c_0$, $c_1$) à l'aide de la clé de déchiffrement s.
- d'autres bits de poids fort, constituant une partie non utile, laquelle est rendue non exploitable en raison de la présence des aléas r.

Le résultat de contrôle d'identité peut être extrait de la valeur $d(m + 2^k r) + e \, mod \, q$ par sélection des k bits de poids les plus faibles d'un nombre modulo t, le nombre étant l'entier le plus proche du produit de ladite valeur par t/q (les k bits de poids faible du second terme proportionnel à $2_k$ étant par construction tous égaux à zéro).

Le résultat de contrôle m peut être un booléen (k = 1). Alternativement, le résultat de contrôle peut être codé sur davantage de bits (k > 1), ce qui permet en particulier au résultat de contrôle d'identité de fournir plus d'information qu'un simple booléen.

Le procédé de contrôle d'identité décrit précédemment est répété pour chaque individu de l'ensemble d'individus à contrôler, en les considérant tour à tour comme l'individu de référence. A chaque mise en oeuvre, les terminaux Ui mis à contribution peuvent être identiques ou différents, selon la politique de sélection choisie à l'étape 108.

Dans ce qui précède, il a été discuté une application particulière du procédé de contrôle d'identité, dans laquelle le résultat du contrôle conditionne un accès à une zone sécurisé. Il est toutefois entendu que le procédé de contrôle d'identité peut trouver d'autres applications.

Le système présenté sur les figures 1 et 2 n'est par ailleurs qu'un mode de réalisation non limitatif.

En particulier, dans ce mode de réalisation, la base de données biométriques est mémorisée à l'extérieur du dispositif de contrôle. Dans d'autres modes de réalisation, la base de données biométriques pourrait être mémorisée dans la mémoire 14 du dispositif de contrôle 1.

Par ailleurs, dans ce mode de réalisation, le dispositif de contrôle réalisant le deuxième traitement est distinct de chacun des terminaux réalisant le premier traitement. Dans un autre mode de réalisation, il pourrait être envisagé que l'un des terminaux endosse le rôle le dispositif de contrôle, autrement dit que l'un des terminaux adaptés pour mettre en oeuvre le premier traitement réalise aussi le deuxième traitement.

## Revendications

1. Procédé de contrôle d'identité d'un individu de référence, le procédé comprenant des étapes suivantes mises en œuvre par un dispositif de contrôle (1) :

   - sélection (108) de terminaux respectivement associés à des individus faisant partie d'un ensemble d'individus dont les identités sont destinées à être contrôlées par le dispositif de contrôle (1), l'individu faisant partie de l'ensemble d'individus,

- envoi (110), à chacun des terminaux sélectionnés, d'une donnée d'entrée associée à l'individu de référence et d'une requête demandant au terminal de mettre en oeuvre un premier traitement cryptographique produisant une donnée de sortie à partir de la donnée d'entrée et d'une clé privée propre à l'individu associé au terminal,
- réception (112) de chaque donnée de sortie,
- mise en oeuvre (114) d'un deuxième traitement cryptographique produisant un résultat de contrôle relatif à l'individu de référence à partir de chaque donnée de sortie.

2. Procédé selon la revendication 1, dans lequel sont sélectionnés au moins trois terminaux.

3. Procédé selon l'une des revendications précédentes, dans lequel la donnée de sortie produite par un terminal dépend également d'un aléa généré par le terminal.

4. Procédé selon l'une des revendications précédentes, dans lequel :

- la donnée d'entrée est une première portion $c_1$ d'un chiffré résultant d'un traitement appliqué à des données d'identité de l'individu de référence,
- le deuxième traitement cryptographique produit le résultat de contrôle relatif à l'individu de référence à partir de chaque donnée de sortie et à partir d'une deuxième portion $c_0$ du chiffré,
- les mises en oeuvre du premier traitement cryptographique par les terminaux et la mise en oeuvre du deuxième traitement cryptographique par le terminal de contrôle forment ensemble un déchiffrement du chiffré à l'aide d'une clé dépendant des clés privées propres aux individus associés aux terminaux sélectionnés.

5. Procédé selon la revendication précédente, dans lequel le chiffré résulte d'un chiffrement homomorphe.

6. Procédé selon l'une des revendications précédentes, dans lequel le déchiffrement est un déchiffrement selon le schéma Brakerski/Fan-Vercauteren (BFV).

7. Procédé selon l'une des revendications précédentes, dans lequel la donnée de sortie $w_i$ produite par un terminal d'indice i sélectionné est calculée comme suit :

$$w_i = s_i.c_1 + e_i + 2^k.d.r_i \, mod \, q$$

où :

- $s_i$ désigne la clé privée propre à un individu associé au terminal d'indice i,
- $c_1$ désigne la donnée d'entrée,
- $e_i$ et $r_i$ sont des aléas générés par le terminal d'indice i,
- $q$ est un nombre prédéfini,
- d est la partie entière inférieure de $q/t$, t étant un entier strictement inférieur à $q$,
- k est un nombre de bits du résultat de contrôle relatif à l'individu de référence.

8. Procédé selon l'une des revendications précédentes, dans lequel le deuxième traitement cryptographique comprend :

- le calcul de la valeur suivante :

$$c_0 + \Sigma_i \, w_i$$

où $c_0$ désigne une donnée formant avec la donnée d'entrée un chiffré résultant d'un chiffrement appliqué à des données d'identité de l'individu de référence, et où $w_i$ désigne la donnée de sortie produite par le terminal associé à l'individu d'indice i, et
- une extraction de $k$ bits de poids les plus faibles d'un nombre modulo $t$, le nombre étant l'entier le plus proche du produit de la valeur calculée par $t/q$, $q$ étant un nombre prédéfini et t étant un entier prédéfini strictement inférieur à $q$.

9. Procédé selon l'une des revendications précédentes, dans lequel les terminaux sont sélectionnés en fonction d'un élément d'identité des individus associés aux terminaux.

10. Procédé selon l'une des revendications précédentes, dans lequel les terminaux sont sélectionnés en fonction d'un élément aléatoire vérifiable.

11. Procédé selon l'une des revendications précédentes, comprenant en outre une étape d'acquisition d'une donnée biométrique de l'individu de référence, dans lequel la donnée d'entrée est au moins une portion d'un chiffré d'une donnée indiquant si l'individu de référence est référencé dans une base de données biométriques.

12. Procédé de contrôle d'accès à une zone sécurisée, le procédé comprenant la mise en oeuvre, pour chaque individu faisant partie d'un ensemble d'individus candidatant pour accéder à la zone sécurisée, d'un contrôle de l'identité de l'individu par le procédé selon l'une des revendications 1 à 11.

EP 4 170 960 A1

13

**13.** Mémoire lisible par ordinateur stockant des instructions exécutables par une unité de traitement de données pour l'exécution des étapes du procédé selon l'une des revendications précédentes.

8

Fig. 1

Fig. 2

Fig. 3

```
┌─────────────────────────────────────────┐
│  Acquisition d'une donnée biométrique     │      102
│  d'un individu de référence               │ ◄──
└─────────────────────────────────────────┘
                    │
                    ▼
┌─────────────────────────────────────────┐
│  Envoi à un serveur de la donnée          │      104
│  biométrique et d'une requête             │ ◄──
│  demandant si l'individu de référence est │
│  référencé dans la base de données du     │
│  serveur                                  │
└─────────────────────────────────────────┘
                    │
                    ▼
┌─────────────────────────────────────────┐
│  Réception d'une réponse à la requête     │      106
│  comprenant une donnée d'entrée           │ ◄──
└─────────────────────────────────────────┘
                    │
                    ▼
┌─────────────────────────────────────────┐
│  Sélection d'un groupe de terminaux       │      108
│  associés à des individus à contrôler     │ ◄──
└─────────────────────────────────────────┘
                    │
                    ▼
┌─────────────────────────────────────────┐
│  Envoi à chaque terminal sélectionné      │      110
│  d'une donnée d'entrée et d'une requête   │ ◄──
│  demandant au terminal de réaliser un     │
│  premier traitement cryptographique       │
└─────────────────────────────────────────┘
                    │
                    ▼
┌─────────────────────────────────────────┐
│  Réception de données de sortie produites │      112
│  par le premier traitement cryptographique│ ◄──
└─────────────────────────────────────────┘
                    │
                    ▼
┌─────────────────────────────────────────┐
│  Deuxième traitement cryptographique      │      114
│  prenant en entrée les donnée de sortie,  │ ◄──
│  pour produire un résultat de contrôle    │
│  d'identité                               │
└─────────────────────────────────────────┘
                    │
                    ▼
┌─────────────────────────────────────────┐
│  Commande du portique en fonction du      │      116
│  résultat                                 │ ◄──
└─────────────────────────────────────────┘
```

Fig. 4

| Réception d'une donnée biométrique d'un individu de référence et d'une requête demandant si l'individu de référence est référencé dans la base de données | 202 |

| Traitement de la requête | 204 |

| Envoi d'une réponse à la requête | 206 |

Fig. 5

| Réception d'une donnée d'entrée et d'une requête demandant au terminal de réaliser un premier traitement cryptographique | 312 |

| Premier traitement cryptographique | 314 |

| Envoi d'une donnée de sortie produite par le premier traitement cryptographique | 316 |

Europäisches
Patentamt

European
Patent Office

Office européen
des brevets

# RAPPORT DE RECHERCHE EUROPEENNE

Numéro de la demande

**EP 22 20 2225**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ROEL PEETERS ET AL: "Toward More Secure and Reliable Access Control", IEEE PERVASIVE COMPUTING, IEEE SERVICE CENTER, LOS ALAMITOS, CA, US, vol. 11, no. 3, 1 mars 2012 (2012-03-01), pages 76-83, XP011449352, ISSN: 1536-1268, DOI: 10.1109/MPRV.2011.42 * pages 78-81 * | 1-13 | INV. H04L9/00 H04L9/08 H04L9/30 |
| A | GILAD ASHAROV ET AL: "Multiparty Computation with Low Communication, Computation and Interaction via Threshold FHE", IACR, INTERNATIONAL ASSOCIATION FOR CRYPTOLOGIC RESEARCH, vol. 20120611:173056, 11 juin 2012 (2012-06-11), pages 1-48, XP061005810, * section 4.1 * | 1-13 | |

DOMAINES TECHNIQUES RECHERCHES (IPC)

**H04L**

Le présent rapport a été établi pour toutes les revendications

| Lieu de la recherche | Date d'achèvement de la recherche | Examinateur |
|---|---|---|
| **Munich** | **12 février 2023** | **Yamajako-Anzala, A** |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**EP 4 170 960 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. CLARK ; U. HENGARTNER.** On the Use of Financial Data as a Random Beacon. *Usenix EVT/WOTE,* 2010
- **I. BENTOV ; A. GABIZON ; D. ZUCKERMAN.** Bitcoin beacon. *arXiv:1605.04559,* 2016

- **J. BONNEAU ; J. CLARK ; S. GOLDFEDER.** *On bitcoin as a public randomness source,* 2015, https://eprint.iacr.org/2015/1015.pdfa
- **DAN BONEH ; JOSEPH BONNEAU ; BENEDIKT BÜNZ ; BEN FISCH.** Verifiable Delay Functions. *CRYPTO,* 2018, vol. 1, 757-788